# FASCICULE DE BREVET EUROPEEN

(11) **EP 0 472 463 B1**
(45) Date de publication et mention de la délivrance du brevet: **26.04.1995**
(21) Numéro de dépôt: 91402270.2
(22) Date de dépôt: 20.08.1991
(51) Int. Cl.: G09G 1/16

(54) **Procédé de présentation d'images sur un écran matriciel et système pour la mise en oeuvre du procédé**
Verfahren zur Darstellung von Bildern auf einem Matrixbildschirm sowie System zur Durchführung dieses Verfahrens
Method for displaying images on a matrix screen and system for carrying out this method

(30) Priorité: 23.08.1990 FR 9010587
(43) Date de publication de la demande: 26.02.1992
(73) Titulaire: SEXTANT Avionique, F-92368 Meudon la Forêt Cédex (FR)
(72) Inventeur: Favot, Jean-Jacques, F-33127 Martignas sur Jalle (FR); Martinez, Michel, F-33127 Martignas sur Jalle (FR); Perbet, Jean-Noel, F-33320 Eysines (FR)
(74) Mandataire: Bloch, Gérard

(56) Documents cités:
- EP-A- 0 164 880
- EP-A- 0 206 178
- EP-A- 0 279 228
- EP-A- 0 305 287
- WO-A-89/06031

## Description

L'invention concerne la présentation d'images sur un afficheur à écran matriciel, couleur ou noir et blanc, à partir d'un générateur d'images, synthétiques ou vidéo.

L'imagerie trouve des applications dans de nombreux domaines et notamment en avionique, ce qui souligne l'intérêt de l'invention.

Entre le générateur et l'afficheur, les images, pour améliorer leur qualité, subissent un traitement, que leur résolution soit supérieure à celle de l'afficheur ou inférieure.

Les systèmes connus à ce jour, comme cela apparaîtra clairement à la lecture de la description qui va suivre, ne permettent pas le traitement d'images de forte définition, à plus de 1000 x 1000 points ou éléments d'image (pixels), en temps réel, c'est-à-dire en moins de 16 ms, correspondant au standard vidéo 60 Hz, ou 20 ms, pour le standard 50 Hz. On notera qu'un pixel est le plus petit élément accessible de l'écran matriciel généralement associé à une couleur fondamentale, rouge, vert ou bleu.

### Art antérieur

Il s'agit notamment de FR-A-8712039.

Il concerne les systèmes qui, à un point à afficher, substituent une microplage de pixels.

Le générateur d'images, pour chaque image, fournit, selon un balayage dit cavalier suivant le tracé à afficher, une suite de pixels définis, d'une part, par leurs coordonnées dans une mémoire matricielle d'image et sur l'écran de l'afficheur, les mêmes, et, d'autre part, par leur code couleur.

A titre d'exemple, le maillage de la mémoire d'image et de l'écran peut être de 1024 (2¹⁰) lignes et 1024 colonnes, correspondant à un adressage de chacune sur 10 bits, la capacité du générateur, si synthétique, pouvant être de 4096 (2¹²) x 4096 pixels, correspondant à 12 x 12 bits. Le code couleur peut être déterminé sur 6 bits. Compte-tenu de la capacité du générateur, du nombre nécessaire de bits d'adressage de la mémoire et du code couleur, la capacité mémoire de chaque noeud de la mémoire d'image peut être de 8 bits.

Le générateur adresse donc, selon le balayage cavalier, la mémoire d'image dans laquelle sont écrites, aux noeuds adressés, les données d'image comprenant un code couleur et deux bits de demi-LSB (low significant byte) pour le traitement par microplages qui va être abordé ci-après.

Dans le cas d'un générateur vidéo, après conversion analogique-numérique, les données d'image sont écrites dans une mémoire, non pas d'image, mais de trame, avant d'être également traitées par microplages.

### Unité de microplages

Elle sert à traiter le tracé à afficher, compte-tenu de ses caractéristiques comme son épaisseur ou sa couleur. Elle est programmée en fonction
- des caractéristiques et de la structure de l'afficheur matriciel (niveaux de luminance, répartition des pixels rouge, vert, bleu selon une répartition quad, trio, diagonale,...),
- des caractéristiques et de la structure de l'image source à traiter,
- des conditions de visualisation de l'écran de l'afficheur (éclairement, distance d'observation,...).

L'unité de microplages permet notamment de rendre indiscernables les artefacts visuels comme les marches d'escalier ou les irisations.

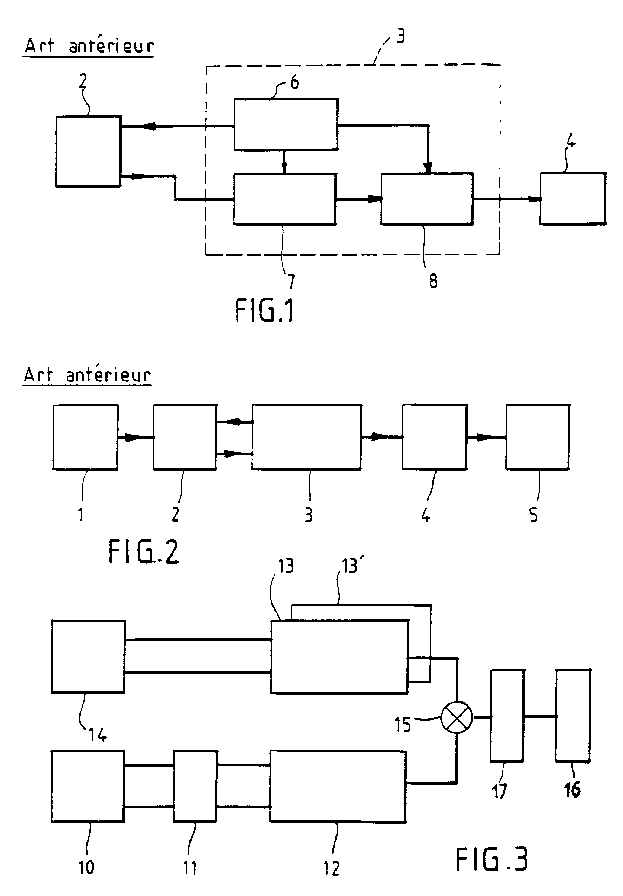

L'unité de microplages 3 de l'art antérieur, en référence à la figure 1, comporte, entre la mémoire d'image 2 et une mémoire écran 4, un bloc de gestion 6, un bloc 7 de génération de microplages et un bloc de corrélation 8.

Le bloc de gestion 6 lit la mémoire d'image 2 de façon séquentielle, c'est-à-dire selon un balayage télévision, par génération sur 20 bits, pour reprendre les données de l'exemple ci-dessus, des adresses des points de la mémoire. Il faut souligner ici que tous les points de la mémoire sont donc lus.

Le bloc de gestion 6 génère aussi des paramètres ici sur 6 bits, de sélection de microplages stockées dans le bloc 7.

Le bloc de gestion 6, enfin, contrôle le bloc 8 de corrélation de la microplage sélectionnée avec le reste de l'image. Ce contrôle s'effectue ici sur 9 bits.

Le bloc de gestion 6 est constitué d'un dispositif logique en réseau programmable de seconde génération du commerce, par exemple des sociétés Cypress Semiconductor ou Advanced Micro Devices, souvent désigné sous le nom de PAL, marque enregistrée de la société Monolithic Memories, qui peut être reprogrammé en fonction de l'afficheur utilisé.

Le bloc 7 de génération de microplages, en fonction du mot, ici de 15 bits, reçu de la mémoire d'image 2 et des paramètres de sélection reçus du bloc de gestion 6, sélectionne une microplage.

Chaque microplage détermine une matrice ici de 4 x 4 points (pixels) de l'afficheur, le niveau de luminance de chaque point étant choisi ici parmi seize. En jouant sur les niveaux de luminance, on peut facilement contrôler le positionnement du point apparemment illuminé sur la microplage et, à l'aide des bits de demi-LSB, le décaler, dans les deux sens, d'une quantité désirée, par sélection d'une microplage appropriée.

Les microplages sont transmises ici sur 64 bits au bloc de corrélation 8.

Le bloc 7 de génération de microplages est constitué d'un ensemble de mémoires PROM (programmable read only memory).

Le bloc de corrélation, ou corrélateur à barillet, 8 a pour fonction de modifier la luminance des pixels écrits précédemment dans la mémoire écran 4 et conservés en mémoire dans le bloc de corrélation en fonction de la luminance des pixels de la microplage sélectionnée par le bloc 7.

Pour les images synthétiques, on peut envisager une fonction corrélation du type SUP (A, B), qui conserve le point de luminance la plus élevée. Pour les images vidéo, par exemple fournies par une caméra de télévision, on peut envisager une fonction corrélation du type SOMME (A, B) ou MOYENNE (A, B).

Le bloc de corrélation est constitué ici de mémoires de type FIFO (first in first out) de capacité de 1024 mots de 4 bits et de circuits "PAL" mettant en oeuvre la fonction de corrélation.

Les données corrélées du bloc de corrélation 8 sont écrites dans la mémoire écran 4, l'écriture d'un pixel dans la mémoire écran effaçant le pixel précédemment écrit. La mémoire écran, qui est ici une mémoire de 1024 x 1024 mots de 4 bits, sert à adapter la fréquence de génération des images (50 ou 60 Hz) à la fréquence de rafraîchissement de l'afficheur (100 Hz).

La mémoire écran 4 est connectée à l'écran par une interface.

Dans le cas où le système comporte une voie synthétique et une voie vidéo, les deux unités de microplages respectives sont reliées à la mémoire écran par un mélangeur destiné à gérer le niveau de balance de l'image synthétique par rapport à l'image fournie par un capteur vidéo, comme une caméra de télévision.

En définitive, et en référence à la figure 2, dans les systèmes de l'art antérieur, pour présenter une image sur un écran matriciel 5 à partir d'un générateur d'images 1, synthétique ou vidéo, le générateur 1 adresse une mémoire matricielle d'image 2 selon un balayage cavalier pour y écrire les données de l'image à afficher, un bloc de gestion 6 balaye séquentiellement tous les pixels de la mémoire d'image et les lit pour sélectionner des microplages de pixels prédéterminées, stockées dans un bloc 7 de génération de microplages et correspondant aux pixels lus de la mémoire d'image pour y substituer respectivement ces microplages, et pour les corréler entre elles dans un bloc de corrélation 8 avant de les écrire séquentiellement dans une mémoire d'écran matricielle de points 4 et de les afficher séquentiellement sur l'écran matriciel 5.

Dans ces conditions, un pixel est traité en 50 ns et une image synthétique de 1024 x 1024 pixels en 56 ms, alors qu'une trame vidéo est traitée en 16 ms, dans le standard 60 Hz, ou 20 ms, dans le standard 50 Hz, sans parler du temps de génération et de mise en mémoire de l'image synthétique également de 56 ms.

Le système, pour les images synthétiques, ne peut donc pas être qualifié de "temps réel".

La présente invention vise à proposer un système et un procédé de présentation d'images sur écran matriciel qualifié de temps réel.

La demanderesse a tiré son invention de la constatation du fait que, dans les systèmes antérieurs, tous les points de l'image étaient traités, qu'ils contiennent ou non de l'information, et qu'il devait être possible de procéder à la corrélation des microplages à l'aide de la mémoire écran. Pareille constatation implique déjà une activité inventive.

### Invention

Elle concerne tout d'abord un procédé de présentation d'une image sur un écran matriciel de pixels à partir d'un générateur d'images, dans lequel, pour chaque point de l'image de coordonnées x, y, on sélectionne l'une d'une série de microplages de pixels prédéterminées et stockées dans un bloc de génération de microplages, pour la corréler en x, y, avec les microplages précédemment présentées avant de l'écrire dans une mémoire d'écran et de la présenter sur l'écran, caractérisé par le fait que, la mémoire d'écran étant organisée selon une matrice de boîtiers mémoires de manière identique à celle des pixels des microplages, on détermine, à partir des coordonnées d'un point à présenter, les adresses correspondantes des boîtiers mémoires pour respectivement les adresser en même temps, de façon matricielle, et lire leurs données qu'on corrèle avec celles de la nouvelle microplage sélectionnée correspondante, on écrit la microplage résultat de la corrélation dans la mémoire d'écran et on lit celle-ci pour afficher l'image sur l'écran.

Le procédé de l'invention, au plan de la durée, est remarquable par plusieurs points. Tout d'abord, et rappelons le ici, seuls les pixels porteurs d'information sont traités dans le cas d'images synthétiques et le traitement fait directement appel à la mémoire d'écran, ce qui limite ainsi la capacité mémoire nécessaire. Ensuite, le retard introduit par le traitement est particulièrement réduit grâce à la suppression du temps de stockage du fait de l'élimination de la mémoire d'image. Enfin, l'adressage matriciel des mémoires d'écran élémentaires est à l'origine d'un gain de temps considérable.

Quand l'image à présenter est une image synthétique, les microplages sont écrites dans la mémoire d'écran de façon aléatoire, c'est-à-dire suivant le tracé (trait ou surface) à afficher.

Quand l'image à présenter est une image vidéo, les microplages sont écrites dans la mémoire d'écran de façon séquentielle, c'est-à-dire suivant un balayage télévision.

L'invention concerne aussi un système pour la mise en oeuvre du procédé de présentation d'une image sur un écran matriciel de pixels à partir d'un générateur d'images, selon l'invention, comprenant au moins une unité de traitement comportant des moyens de gestion, des moyens de génération de microplages et des moyens de corrélation agencés pour, pour chaque point de l'image de coordonnées x, y, sélectionner l'une d'une série de microplages de pixels prédéterminées et stockées dans les moyens de génération pour la corréler en x, y, dans les moyens de corrélation, avec les microplages précédemment présentées, avant de l'écrire dans une mémoire d'écran et de la présenter sur l'écran, caractérisé par le fait que la mémoire d'écran est intégrée à l'unité de traitement, elle comporte une matrice de boîtiers mémoires organisés de manière identique à celle des pixels des microplages, associée à un bus unique d'adressage matricé permettant d'adresser les boîtiers mémoires simultanément et connecté à des moyens de génération des adresses des boîtiers mémoires et l'unité de traitement est directement connectée au générateur d'images.

De préférence, les moyens de corrélation sont associés à des moyens de permutation connectés aux moyens de génération de microplages et agencés pour assurer, avant la corrélation, la correspondance entre les microplages issues des moyens de génération de microplages et celles qui ont été précédemment présentées.

Avantageusement, le système de présentation de l'invention comprend deux unités identiques de traitement par microplages, chacune fonctionnant alternativement en traitement d'image et en affichage, et des moyens de synchronisation des deux unités de traitement.

L'invention sera mieux comprise à l'aide de la description suivante de l'art antérieur et de l'invention, en référence au dessin annexé, sur lequel
- la figure 1 est une vue schématique d'une unité de traitement par microplages de l'art antérieur;
- la figure 2 est une vue schématique du système de présentation d'images intégrant l'unité de la figure 1;
- la figure 3 est une vue schématique du système de présentation d'images de l'invention;

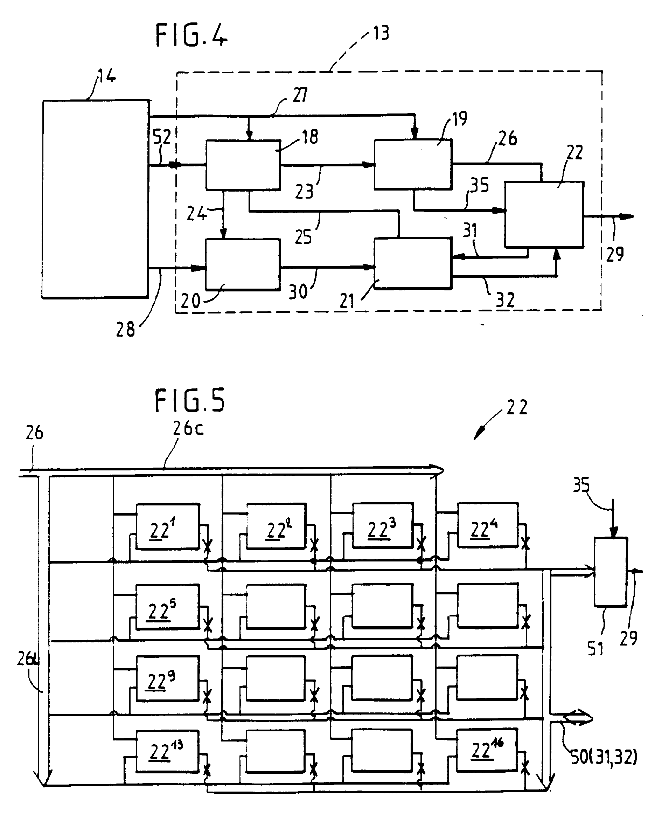

- la figure 4 est une vue schématique de l'unité de traitement par microplages du système de la figure 3;
- la figure 5 est une vue schématique de la mémoire d'écran matricielle de l'unité de la figure 4;
- la figure 6 est une vue schématique du bloc de permutation et de corrélation de l'unité de traitement de la figure 4;
- la figure 7 est une illustration schématique du procédé de présentation d'images de l'invention et
- la figure 8 illustre différents positionnements d'une microplage dans la mémoire d'écran.

On ne décrira ci-après en détails que la voie synthétique du système de présentation d'images de l'invention, étant entendu qu'il comporte aussi une voie vidéo, constituée, en aval du générateur vidéo 10, d'un convertisseur analogique-numérique 11 et d'une carte 12 de traitement par microplages similaire à celle 13 de la voie synthétique directement reliée au générateur synthétique 14, les deux cartes de traitement 12, 13 étant reliées à un mélangeur 15 relié à l'écran de présentation d'images 16 par une interface 17 (figure 3).

L'unité 13 de traitement par microplages, ici unique, comporte un bloc de gestion 18, un bloc 19 de génération des adresses mémoire, un bloc 20 de génération des microplages, identique à celui de l'art antérieur, un bloc 21 de permutation et de corrélation et un bloc mémoire d'écran 22.

Le bloc de gestion 18, ici constitué de circuits de type "PAL", assure diverses fonctions. Il contrôle, par la ligne 23, le générateur d'adresses 19 selon le mode d'accès à l'unité 13, accès en écriture en traitement d'image, accès en lecture en affichage d'image. Le bloc 18 fournit au générateur 20, sur la ligne 24, les paramètres de sélection de microplage, établis comme dans l'art antérieur décrit ci-dessus, la sélection s'effectuant à partir des données d'image fournies par le générateur 14 sur la ligne 28. Le bloc 18 contrôle, par la ligne 25, les moyens de permutation, abordés ci-après, du bloc 21. Pour un afficheur de structure quad les paramètres de sélection de microplage sont fournis sur six bits, dont deux bits de codage de la structure quad et quatre bits de codage des conditions d'observations. Pour un afficheur de structure trio, sont fournis quatre bits de codage de la structure trio et deux bits de codage des conditions d'observation.

Le bloc 18 contrôle aussi la mémoire d'écran 22 par l'intermédiaire du bloc de génération d'adresses 19 et de la ligne 35.

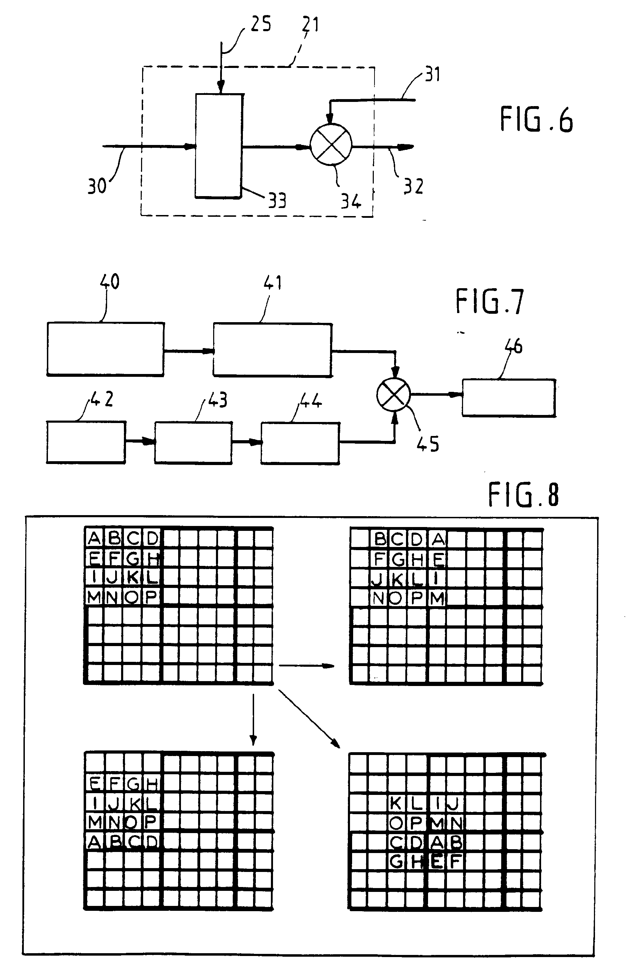

La mémoire d'écran 22 (figure 5) est constituée d'une matrice de mémoires élémentaires, ou boîtiers mémoires, 22¹-22¹⁶, organisées de manière identique à celle des pixels des microplages de traitement, avec en l'espèce seize mémoires RAM de capacité de 64 K mots de 4 bits chacune. La mémoire 22 comporte un bus adresse matricé 26 qui se divise en un bus adresse colonnes 26C et un bus adresse lignes 26L et qui permet d'adresser simultanément tous les boîtiers, ici en 30 ns, pour écrire ou lire une matrice de pixels de même structure que les microplages de traitement. Lors, par exemple, de l'écriture d'une microplage dans la mémoire d'écran 22, les pixels de la microplage sont ainsi écrits respectivement dans toutes les mémoires élémentaires de la mémoire d'écran. Toutes les mémoires élémentaires d'une même colonne reçoivent par le bus 26C la même adresse et toutes les mémoires élémentaires d'une même ligne reçoivent par le bus 26L la même adresse.

On soulignera que la lecture de la mémoire écran 22, pour l'affichage sur l'écran, s'effectue ici, par la ligne 29, de façon séquentielle, par l'intermédiaire, puisqu'il s'agit d'une mémoire matricielle, du multiplexeur 51 contrôlé par la ligne 35. La présentation des pixels sur une ligne de l'écran d'affichage, par exemple, s'effectue par envoi simultané de la succession des quatre pixels, de même adresse ligne, des quatre mémoires élémentaires respectives de la ligne correspondante de la mémoire d'écran. Les adresses colonnes sont incrémentées ici de 4 après chaque accès à la mémoire d'écran. Les lignes de la mémoire d'écran sont ici lues 4 par 4, c'est-à-dire que les adresses lignes sont incrémentées de 4 toutes les 4 lignes.

Le bloc 19 de génération des adresses est ici constitué de circuits de type "PAL".

Par convention, et on peut en considérer d'autres, les adresses ligne et colonne de base délivrées par le générateur 14 sur la ligne 27 correspondent aux coordonnées, sur l'écran d'affichage, du point commun aux quatre pixels centraux de la microplage associée. Les adresses des différentes mémoires élémentaires 22¹-22¹⁶ sont déterminées à partir des coordonnées X, Y du pixel de l'écran à traiter, délivrées ici par le générateur synthétique de symboles, ou par le convertisseur analogique-numérique associé au générateur vidéo.

En mode traitement d'image, le bloc 19 fournit ici 4 adresses colonnes ADRX₁-ADRX₄ et 4 adresses lignes ADRY₁-ADRY₄, en l'espèce sur 8 bits, les coordonnées X et Y étant fournies sur 10 bits chacune, de la manière suivante, non exclusive de l'invention :
ADRX₁=(X+1)/4 pour la 1^{ère} colonne de boîtiers,
ADRX₂= X /4 pour la 2^{ème} colonne de boîtiers,
ADRX₃=(X-1)/4 pour la 3^{ème} colonne de boîtiers,
ADRX₄=(X-2)/4 pour la 4^{ème} colonne de boîtiers,
ADRY₁=(Y+1)/4 pour la 1^{ère} ligne de boîtiers,
ADRY₂= Y /4 pour la 2^{ème} ligne de boîtiers,
ADRY₃=(Y-1)/4 pour la 3^{ème} ligne de boîtiers,
ADRY₄=(Y-2)/4 pour la 4^{ème} ligne de boîtiers.

En mode affichage sur l'écran, l'adresse de base X, Y est générée dans le bloc 19 pour, comme développé ci-dessus, provoquer une lecture de la mémoire d'écran, les adresses appliquées aux mémoires élémentaires étant déterminées comme en mode écriture.

Le bloc 21 assure, dans des circuits 33 de type "PAL", la permutation des données fournies, par la ligne 30, par le générateur de microplages 20, sous le contrôle, par la ligne 25, du bloc de gestion 18 et, dans des circuits 34 de type "PAL", la corrélation des données ainsi réorganisées avec les données lues en mémoire d'écran, par la ligne 31, avant d'écrire, par la ligne 32, les microplages corrélées dans la mémoire d'écran 22, les lignes 31 et 32 étant regroupées, au niveau de la mémoire d'écran 22, dans le bus 50. Les circuits de permutation 33 assurent, avant corrélation, la cohérence entre les microplages issues du générateur 20 et celles qui sont lues en mémoire d'écran 22, pour que les pixels respectifs de même couleur se correspondent et puissent être corrélés.

A titre d'exemple, les seize éléments d'une microplage fournie par le générateur 20 sont repérés par les seize premières lettres de l'alphabet disposées comme suit :

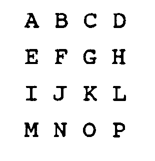

Sur la figure 8 sont représentés quatre positionnements de microplage dans la mémoire d'écran correspondant à quatre adressages différents X, Y. En haut à gauche est illustré la position initiale de la microplage pour des coordonnées X, Y fournissant des adresses identiques dans tous les boîtiers de la mémoire d'écran 22. Dans cette position, il y a correspondance directe entre les éléments de la microplage et ceux de la matrice lus dans la mémoire d'écran 22; il n'y a pas de permutation à effectuer. En haut à droite sur la figure 8 est illustré le pavé d'éléments lus dans la mémoire d'écran correspondant à une incrémentation d'une unité de la coordonnée X, c'est-à-dire à un déplacement horizontal vers la droite d'un pixel; la correspondance entre les éléments de la mémoire et ceux de la microplage implique un décalage de ces derniers d'un élément vers la gauche :

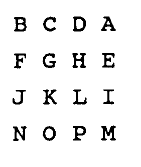

Ainsi, dans la direction horizontale, quatre cas de permutation sont possibles, suivant le décalage nécessaire, de 0 à 3, compte-tenu de la valeur de X. Il en est de même dans la direction verticale, compte-tenu de la valeur de Y. Globalement, pour des coordonnées X, Y quelconques du centre de la microplage, seize cas différents de permutation peuvent surgir, sous la commande, par la ligne 25, du bloc de gestion 18. En bas à gauche sur la figure 8 est représentée la microplage avec une incrémentation d'une unité de la coordonnée Y; en bas à droite est représentée la microplage avec une incrémentation de 2 unités des deux coordonnées X et Y.

Les circuits de corrélation 34 fonctionnent en parallèle sur tous les éléments de la microplage et de la matrice des éléments mémoires. Ils mettent ici en oeuvre la fonction SUP(A, B) ou SOMME(A, B) pour un couple d'un pixel de la microplage et du pixel correspondant lu dans la mémoire d'écran, par la ligne 31. Dans le cas de la fonction SUP(A, B), c'est le pixel de plus forte luminance qui est ré-inscrit en mémoire d'écran par la ligne 32.

En définitive, le fonctionnement de l'unité de traitement 13 est du type aléatoire (image synthétique) ou séquentiel (image vidéo) en entrée et ici séquentiel en sortie.Il pourrait d'ailleurs être aussi aléatoire en sortie. On notera que l'affichage séquentiel est particulièrement bien adapté aux écrans plats matriciels couleur tels que les écrans à cristaux liquides (LCD). En référence à la figure 7, le traitement par microplages comporte une étape 40 de détermination des adresses de la mémoire d'écran 22 suivie d'une étape 41 de lecture de la mémoire, une étape 42 de détermination des paramètres de sélection de microplage suivie d'une étape 43 de génération de microplage et d'une étape 44 de permutation, une étape 45 de corrélation suivant les deux étapes 41 et 44, se terminant sensiblement en même temps, et précédant une étape 46 d'écriture dans la mémoire. Comme l'unité de traitement 13 ne traite que des points contenant de l'information, le temps de présentation des images du système qui vient d'être décrit n'est pas limité par la vitesse de traitement; il ne dépend que de la vitesse de génération des consignes du générateur synthétique 14. Ainsi, les sept étapes 40-46, pour une consigne, sont exécutées ici en 100 ns correspondant à la fourniture de la consigne comprenant les coordonnées X, Y, la couleur et la position fine (bits de demi-LSB).

Les performances du système qui vient d'être décrit sont remarquables. Pour un cycle image de 16 ms, une génération graphique à la vitesse de 100 ns par point et des mémoires à temps d'accès de 30 ns, la capacité de traitement pendant un cycle image est de 160 000 points d'image ou encore de 2 560 000 points d'image pour des fonds colorés.

Le système de l'invention est agencé pour traiter des images de toutes sortes, avec des microplages de dimensions aussi quelconques; la définition et la répartition des pixels colorés de l'écran matriciel ne sont pas non plus limitatives de l'invention. Le système peut être adapté en temps réel aux conditions d'observation de l'écran. Pour des distances plus grandes, à acuité visuelle constante, la taille des microplages peut être augmentée. Les niveaux de luminance de leurs pixels peuvent être optimisés en fonction de l'angle d'observation, pour les écrans à cristaux liquides, ou en fonction de l'éclairement, selon la perception des demi-teintes et des couleurs ou dans le cas d'utilisation de dispositifs d'aide à la navigation, s'il s'agit de cette application, pour, par exemple avec des jumelles de vision nocturne, réduire la luminance du rouge.

On a décrit ci-dessus un système de présentation d'images dont chaque voie, et notamment la voie synthétique, ne comporte qu'une unité de traitement par microplages. Dans ce cas, les images sont affichées au fur et à mesure qu'elles sont traitées. On pourrait aussi prévoir, et c'est même, à certains égards avantageux, deux unités de traitement identiques 13, 13′, l'une fonctionnant en traitement (mode écriture d'une image dans sa mémoire d'écran) pendant que l'autre fonctionne en affichage (mode lecture d'une autre image dans sa mémoire d'écran). Dans ce cas, un signal de synchronisation image, provenant par exemple de l'écran de présentation d'images 16, doit parvenir au bloc de gestion 18, par la ligne 52.

## Revendications

1. Procédé de présentation d'une image sur un écran matriciel de pixels à partir d'un générateur d'images (14), dans lequel, pour chaque point de l'image de coordonnées x, y, on sélectionne (42, 43) l'une d'une série de microplages de pixels prédéterminées et stockées dans un bloc (20) de génération de microplages, pour la corréler en x, y (45) avec les microplages précédemment présentées avant de l'écrire (46) dans une mémoire d'écran et de la présenter sur l'écran, caractérisé par le fait que, la mémoire d'écran étant organisée selon une matrice de boîtiers mémoires de manière identique à celle des pixels des microplages, on détermine (40), à partir des coordonnées d'un point à présenter, les adresses correspondantes des boîtiers mémoires pour respectivement les adresser en même temps, de façon matricielle, et lire (41) leurs données qu'on corrèle (45) avec celles de la nouvelle microplage sélectionnée correspondante (42, 43), on écrit (46) la microplage résultat de la corrélation dans la mémoire d'écran et on lit celle-ci pour afficher l'image sur l'écran.

2. Procédé selon la revendication 1, dans lequel on permute (44) les pixels de la microplage sélectionnée avant de les corréler (45) avec les données des boîtiers mémoires pour assurer leur correspondance.

3. Procédé selon l'une des revendications 1 et 2, dans lequel la microplage résultat de la corrélation, l'image à présenter étant une image synthétique, est écrite (46) dans la mémoire d'écran en mode aléatoire.

4. Procédé selon l'une des revendications 1 et 2, dans lequel la microplage résultat de la corrélation, l'image à présenter étant une image vidéo, est écrite dans la mémoire d'écran en mode séquentiel.

5. Système de présentation d'une image sur un écran matriciel de pixels à partir d'un générateur d'images, pour la mise en oeuvre du procédé de la revendication 1, comprenant au moins une unité de traitement (13) comportant des moyens de gestion (18), des moyens (20) de génération de microplages et des moyens (34) de corrélation agencés pour, pour chaque point de l'image de coordonnées x, y, sélectionner l'une d'une série de microplages de pixels prédéterminées et stockées dans les moyens de génération (20) pour la corréler en x, y, dans les moyens de corrélation (34), avec les microplages précédemment présentées, avant de l'écrire dans une mémoire d'écran (22) et de la présenter sur l'écran (16), caractérisé par le fait que la mémoire d'écran (22) est intégrée à l'unité de traitement (13), elle comporte une matrice de boîtiers mémoires (22¹-22¹⁶) organisée de manière identique à celle des pixels des microplages, associée à un bus unique d'adressage matricé (26) permettant d'adresser les boîtiers mémoires simultanément et connecté à des moyens (19) de génération des adresses des boîtiers mémoires et l'unité de traitement (13) est directement connectée au générateur d'images (14).

6. Système selon la revendication 5, dans lequel les boîtiers d'une même colonne et les boîtiers d'une même ligne de la mémoire d'écran (22) sont adressés (26C, 26L) respectivement avec les mêmes adresses.

7. Système selon l'une des revendications 5 et 6, dans lequel les moyens de corrélation (34) sont associés à des moyens de permutation (33) connectés aux moyens (20) de génération de microplages et agencés pour assurer, avant la corrélation, la correspondance entre les microplages issues des moyens (20) de génération de microplages et celles qui ont été précédemment présentées.

8. Système selon l'une des revendications 5 à 7, dans lequel il est prévu deux unités de traitement identiques (13, 13′), fonctionnant, chacune, alternativement en mode écriture de sa mémoire d'écran et en mode lecture de sa mémoire d'écran, et des moyens (52, 18) de synchronisation des deux unités de traitement.

## Patentansprüche

1. Verfahren zum Anzeigen eines Bildes auf einem Matrixbildschirm, ausgehend von einem Bilderzeuger (14), in dem für jeden Bildpunkt mit den Koordinaten x, y einer aus einer Reihe von vorbestimmten und in einem Block (20) zur Erzeugung von Feinbereichen gespeicherten Pixelfeinbereichen ausgewählt wird (42, 43), um diesen in x, y (45) mit den zuvor angezeigten Feinbereichen zu korrelieren, bevor er in einen Bildschirmspeicher geschrieben (46) und auf dem Bildschirm angezeigt wird, dadurch gekennzeichnet, daß der Bildschirmspeicher nach Art einer Speicherelementenmatrix organisiert ist, die identisch wie die der Pixel der Feinbereiche ist, und daß ausgehend von den Koordinaten eines anzuzeigenden Punktes die entsprechenden Adressen der Speicherelemente bestimmt werden (40), um sie jeweils gleichzeitig matrixartig zu adressieren und ihre Daten auszulesen (41), die mit denen des entsprechenden neuen, ausgewählten (42, 43) Feinbereichs korreliert werden (45), der aus der Korrelation resultierende Feinbereich in den Bildschirmspeicher geschrieben wird (46) und dieser ausgelesen wird, um das Bild auf dem Bildschirm anzuzeigen.

2. Verfahren nach Anspruch 1, dadurch gekennzeichnet, daß die Pixel des ausgewählten Feinbereichs permutiert werden (44), bevor sie mit den Daten der Speicherelemente korreliert werden (45), um ihre Zuordnung zu gewährleisten.

3. Verfahren nach Anspruch 1 oder 2, dadurch gekennzeichnet, daß der aus der Korrelation resultierende Feinbereich, wenn das darzustellende Bild ein synthetisches Bild ist, regellos in den Bildschirmspeicher geschrieben wird (46).

4. Verfahren nach Anspruch 1 oder 2, dadurch gekennzeichnet, daß der aus der Korrelation resultierende Feinbereich, wenn das darzustellende Bild ein Videobild ist, sequenziell in den Bildschirmspeicher geschrieben wird.

5. System zur Darstellung eines Bildes auf einem Matrixbildschirm aus Pixeln ausgehend von einem Bilderzeuger, um das Verfahren nach Anspruch 1 umzusetzen, mit wenigstens einer Verarbeitungseinheit (13), die Mittel zur Steuerung (18), Mittel (20) zur Erzeugung von Feinbereichen und Korrelationsmittel (34) aufweist, die so eingerichtet sind, um für jeden Punkt des Bildes mit den Korrdinaten x, y einen aus einer Reihe von Pixelfeinbereichen, die vorbestimmt und in den Mitteln zur Erzeugung (20) gespeichert sind, auszuwählen, um ihn in x, y in dem Korrelationsmittel (34) mit den zuvor angezeigten Feinbereichen zu korrelieren, bevor er in einen Bildschirmspeicher (22) geschrieben und auf dem Bildschirm (16) dargestellt wird, dadurch gekennzeichnet, daß der Bildschirmspeicher (22) in die Verarbeitungseinheit (13) integriert ist, daß er eine Speicherelementenmatrix (22¹-22¹⁶) aufweist, die auf identische Weise organisiert ist wie die der Pixel der Feinbereiche, und die einem matrixartigen Einheitsbus (26) zur Adressierung zugeordnet ist, der ermöglicht, die Speicherelemente gleichzeitig zu adressieren und mit Mitteln (19) zur Erzeugung der Adressen der Speicherelemente verbunden ist, wobei die Verarbeitungseinheit (13) unmittelbar mit dem Bilderzeuger (14) verbunden ist.

6. System nach Anspruch 5, dadurch gekennzeichnet, daß die Speicherelemente einer gleichen Spalte und die Speicherelemente einer gleichen Zeile des Bildschirmspeichers (22) jeweils mit den gleichen Adressen adressiert werden (26C, 26L).

7. System nach Anspruch 5 oder 6, dadurch gekennzeichnet, daß die Korrelationsmittel (34) Permutationsmitteln (33) zugeordnet sind, die mit den Mitteln (20) zur Erzeugung der Feinbereiche verbunden sind und so eingerichtet sind, daß sie vor der Korrelation die Zuordnung zwischen den aus den Mitteln (20) zur Erzeugung der Feinbereiche hervorgehenden Feinbereichen und denen, die zuvor dargestellt worden sind, gewährleisten.

8. System nach einem der Ansprüche 5 bis 7, dadurch gekennzeichnet, daß zwei identische Verarbeitungseinheiten (13, 13′) vorhanden sind, die jede abwechselnd im Schreibmodus ihres Bildschirmspeichers und im Lesemodus ihres Bildschirmspeichers arbeiten, sowie eine Einrichtung (52, 18) zur Synchronisation der beiden Verarbeitungseinheiten.

## Claims

1. A process for presenting an image on a matrix screen of pixels, from an image generating device (14), in which, for each point of the image of coordinates x, y, one of a series of micro-ranges of pixels, which are predetermined and stored in a block (20) for generating micro-ranges, is selected (42, 43) in order to correlate it in x, y (45) with the micro-ranges previously presented, prior to writing (46) it to a screen memory and presenting it on the screen, characterised in that the screen memory being arranged in accordance with a matrix of memory compartments in an identical manner to that of the pixels of the micro-ranges, the corresponding addresses of the memory compartments are determined (40) from the coordinates of one point to be presented in order respectively to address them at the same time, in a matrix manner, and to read (41) their data which is correlated (45) with that of the new corresponding selected micro-range (42, 43), the micro-range resulting from the correlation is written (46) to the screen memory, and this is read in order to display the image on the screen.

2. A process according to claim 1, in which the pixels of the selected micro-range are permutated (44) before they are correlated (45) with the data of the memory compartments in order to ensure that they correspond.

3. A process according to either of claims 1 or 2, in which, the image to be presented being a synthetic image, the micro-range resulting from the correlation is written (46) to the screen memory in a random mode.

4. A process according to either of claims 1 or 2, in which, the image to be presented being a video image, the micro-range resulting from the correlation is written to the screen memory in a sequential mode.

5. A system for presenting an image on a matrix screen of pixels from an image generating device to implement the process of claim 1, comprising at least one processing unit (13), comprising management means (18), means (20) for generating micro-ranges and correlation means (34) arranged in order, for each point of the image of coordinates x, y, to select one of a series of micro-ranges of pixels, which are predetermined and stored in the generation means (20) in order to correlate it in x, y, in the correlation means (34), with the micro-ranges previously presented, prior to writing it to a screen memory (22) and presenting it on the screen (16), characterised in that the screen memory (22) is integrated into the processing unit (13), it comprises a matrix of memory compartments (22¹-22¹⁶) arranged in an identical manner to that of the pixels of the micro-ranges, associated with a single bus for matrix addressing (26) permitting the memory compartments to be addressed simultaneously and connected to the means (19) for generating addresses of the memory compartments and the processing unit (13) is directly connected to the image generator (14).

6. A system according to claim 5, in which the compartments of the same column and the compartments of the same line of the screen memory (22) are addressed (26C, 26L) respectively with the same addresses.

7. A system according to either of claims 5 or 6, in which the correlation means (34) are associated with permutation means (33) connected to the means (20) for generating micro-ranges and arranged to ensure, prior to the correlation, the correspondence between the micro-ranges from the means (20) for generating micro-ranges and those which have previously been presented.

8. A system according to one of claims 5 to 7, in which two identical processing units (13, 13′) are provided, each operating alternately in the mode of writing to its screen memory and the mode of reading its screen memory, and means (52, 18) for synchronising the two processing units.
